# EUROPÄISCHE PATENTANMELDUNG

(11) **EP 1 283 475 A2**
(43) Veröffentlichungstag der Anmeldung: **12.02.2003**
(21) Anmeldenummer: 02017934.7
(22) Anmeldetag: 09.08.2002
(51) Int. Cl.: G06F 15/17

(54) **Datenverarbeitungsanlage mit mindestens einer Rechnerbaugruppe und damit verbundenen weiteren Rechner- oder sonstigen autark arbeitenden Baugruppen**

(30) Priorität: 10.08.2001 DE 10139387
(71) Anmelder: SIEMENS AKTIENGESELLSCHAFT, 80333 München (DE)
(72) Erfinder: Giraud, Rene, 76344 Eggenstein-Leopoldshafen (DE)

(57) **Zusammenfassung**

Die Erfindung betrifft eine Datenverarbeitungsanlage mit mindestens einer Rechnerbaugruppe (1, 17, 18, 19), die mit Erweiterungssteckplätzen (2, 3, 4, 23) für weitere Baugruppen ausgestattet ist. In die Erweiterungssteckplätze (4, 23) für Speichermodule (RAM) ist jeweils ein Koppelbaustein (5, 14, 15, 16) steckbar, über den der Datenverkehr zu weiteren Rechnerbaugruppen (1, 17, 18, 19) oder zu anderen autark arbeitenden Baugruppen führbar ist. Bevorzugt ist bei einem Cluster-Server die mindestens eine Rechnerbaugruppe (1) ein Master-Rechner und die anderen Rechnerbaugruppen (17, 18, 19) sind jeweils Slave-Rechner, wobei alle Rechnerbaugruppen (1, 17, 18, 19) mit einem Koppelbaustein (5, 14, 15, 16) versehen sind und wobei die Koppelbausteine (14, 15, 16) der Slave-Rechner (17, 18, 19) jeweils über Interfacebausteine (20) mit einem Interfacebaustein (8, 9, 10) im Koppelbaustein (5) des Master-Rechners (1) über eine separate Hochgeschwindigkeitsdatenleitung (11, 12, 13) verbunden sind.

## Beschreibung

Die Erfindung betrifft eine Datenverarbeitungsanlage mit mindestens einer Rechnerbaugruppe und damit verbundenen weiteren Rechner- oder sonstigen autark arbeitenden Baugruppen sowie Verfahrensschritte und insbesondere auch Softwaremodule zum Betrieb einer solchen Datenverarbeitungsanlage nach den gattungsgemäßen Merkmalen des Hauptanspruchs.

Es ist an sich bekannt, dass die im Wesentlichen um eine CPU (Central Processor Unit) angeordnete Rechnerbaugruppe für einen Personal Computer (PC) auf der Hauptplatine oder dem so genannten Mainboard Steckplätze für eine Vielzahl von Erweiterungen aufweist. Diese Steckplätze sind zum einen für die Aufnahme von Speichermodulen (RAM) für den Arbeitsspeicher und zum anderen für die Aufnahme von speziellen Baugruppen, wie z. B. Grafikkarten, mit jeweils einem vorgegebenen Schnittstellenprotokoll ausgestattet.

Für die Verbindung der Rechnerbaugruppe mit peripheren Geräten oder auch mit weiteren Rechnerbaugruppen sind zusätzlich weitere Steckplätze, z. B. so genannte PCI-Slots, mit einem vorgegebenen Busprotokoll vorhanden. Insbesondere bei der Kopplung mit anderen Rechnerbaugruppen oder auch mit autark, d. h. mit eigener Intelligenz, arbeitenden Baugruppen, wie z. B. Logikanalysatoren, ist die Leistungsfähigkeit dieser Kopplungsart nicht ausreichend und schränkt den möglichen oder notwendigen Datenverkehr zu sehr ein.

Der Erfindung liegt daher die Aufgabe zugrunde, eine Datenverarbeitungsanlage der eingangs genannten Art derart zu verbessern, dass eine einfache und leistungsfähige Kopplung einer Rechnerbaugruppe mit weiteren Rechnerbaugruppen oder mit autark arbeitenden Baugruppen möglich ist.

Gemäß der Erfindung ist eine Datenverarbeitungsanlage, ein Verfahren oder ein Software- oder Firmware-Baustein für den Betrieb mindestens einer Rechnerbaugruppe, die mit Erweiterungssteckplätzen für weitere Baugruppen ausgestattet ist, in vorteilhafter Weise dadurch weitergebildet, dass gemäß einer ersten Ausführungsform in die Erweiterungssteckplätze für Speichermodule (RAM) jeweils ein Koppelbaustein steckbar ist, über den der Datenverkehr zu weiteren Rechnerbaugruppen oder zu anderen autark arbeitenden Baugruppen führbar ist. Beispielsweise kann die autark arbeitende Baugruppe ein Logikanalysator sein.

Mit der Erfindung kann in besonders vorteilhafter Weise ein hochleistungsfähiger so genannter Cluster-Server als erste Ausführungsform aufgebaut werden, bei dem dann die Speichererweiterungssteckplätze oder -slots als Bestandteil eines intelligenten Hochgeschwindigkeitsnetzwerks genutzt werden können. Hierbei ist die mindestens eine Rechnerbaugruppe ein Master-Rechner und die anderen Rechnerbaugruppen sind jeweils Slave-Rechner. Alle Rechnerbaugruppen sind vorzugsweise mit einem Koppelbaustein versehen, wobei die Koppelbausteine der Slave-Rechner über Interfacebausteine jeweils mit einem Interfacebaustein im Koppelbaustein des Master-Rechners über eine separate Hochgeschwindigkeitsdatenleitung verbunden sind.

Bei den herkömmlichen Rechnerbaugruppen auch für preisgünstige Personal Computer (PCs) bilden die üblichen drei bis vier Erweiterungsslots, die bisher nur für Speichererweiterungen genutzt wurden, in der Regel die schnellste Schnittstelle und bieten daher im Gegensatz zu den Schnittstellen für periphere Geräte, z. B. so genannte PCI-Slots, ein Vielfaches der Leistungsfähigkeit. Vorteilhaft ist es dabei außerdem, wenn die Interfacebausteine jeweils über Synchronisations-Logikbausteine mit dem jeweiligen Erweiterungssteckplatz verbunden sind.

Gemäß einer zweiten nebengeordneten Ausführungsform ist in die Erweiterungssteckplätze für Grafikmodule auf der Rechnerbaugruppe jeweils ein Koppelbaustein steckbar, über den der Datenverkehr zu weiteren Rechnerbaugruppen oder zu anderen autark arbeitenden Baugruppen führbar ist. Üblicherweise werden auch bei einfachen preisgünstigen PCs relativ schnelle Grafikschnittstellen, z. B. so genannte AGP-Schnittstellen, bereitgestellt, die bisher allerdings nur für den Einsatz von Grafikkarten genutzt wurden.

Mit dieser zweiten Ausführungsform nach der Erfindung ist dagegen der Einsatz so genannter multifunktionaler Grafikkarten vorgeschlagen, bei denen auf einfache Weise der Koppelbaustein direkt mit einer autark arbeitenden Baugruppe verbunden oder versehen sein kann. Beispielsweise kann auch hier die autark arbeitende Baugruppe ein Logikanalysator sein, so dass eine Kombinationskarte aus einer Grafikkarte und einem Logikanalysator aufbaubar ist.

Nach einem vorteilhaften Verfahren zum Betrieb einer der zuvor beschriebenen Datenverarbeitungsanlagen, z. B. mit einem entsprechenden Software- oder Firmware-Baustein, legt der Master-Rechner ein von einem Slave-Rechner zu bearbeitendes Programmteil (Task) in einem dem Koppelbaustein zugeordneten Speicherbereich ab und signalisiert mit einem Flag, dass die Daten zur Verfügung stehen. Anhand der ebenfalls hinterlegten Adressinformation werden die Daten zu dem adressierten Slave-Rechner übertragen und dort wird ebenfalls mit einem Flag signalisiert, dass die Daten zur Verfügung stehen.

Nach der Abarbeitung des Programmteils werden die Daten dann in einem vorgegebenen Speicherbereich des Koppelbausteins im Slave-Rechner zur Übertragung an den Master-Rechner hinterlegt. Dort wird wiederum nach einer Abspeicherung in einem vorgegebenen Speicherbereich mit einem Flag signalisiert, dass das Programmteil abgearbeitet ist. Das oder die Flags können so aufgebaut sein, dass auch ein Interruptsignal über eine separate Busverbindung auswertbar ist.

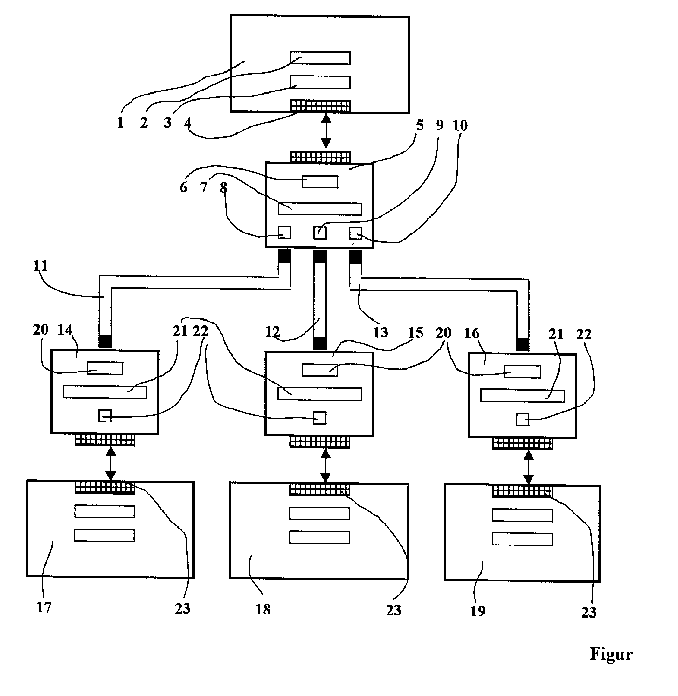

Die Erfindung wird anhand eines in der Zeichnung dargestellten Ausführungsbeispiels erläutert. Die einzige Figur zeigt ein prinzipielles Blockschaltbild eines Cluster-Servers mit einem Master-PC und drei Slave-PCs, die über die Speichererweiterungsslots miteinander verbunden sind.

In der Figur ist schematisch eine Rechnerbaugruppe als Master-PC 1 gezeigt, die über Erweiterungsslots 2, 3 und 4 für weitere Speichermodule für eine Erweiterung des Arbeitsspeichers verfügt. Auf die nähere Funktion der Rechnerbaugruppe braucht hier nicht eingegangen werden, da diese der von handelsüblichen Personal Computern (PCs) entspricht. In den dritten Erweiterungsslot 4 ist ein Koppelbaustein 5 eingesteckt, der das Speichermodul (RAM) 6, eine Master-Slave-Synchronisationslogik 7 und Interfacebausteine 8, 9 und 10 aufweist. Das RAM 6 kann dabei auch ein Bestandteil der Master-Slave-Synchronisationslogik 7 selbst sein, da es bei den heute üblichen ASIC-Schaltkreisen möglich ist, Logikfunktionen und Speichermodule auf einem Baustein zu realisieren.

Über jeden der Interfacebausteine 8, 9 und 10 ist eine Hochgeschwindigkeitsdatenverbindung 11, 12 und 13 jeweils zu Koppelbausteinen 14, 15 und 16 hergestellt, die wiederum mit Slave-PCs 17, 18 und 19 verbunden sind. Die Datenverbindungen 11, 12 und 13 können dabei je nach der erforderlichen Leistungsfähigkeit aus einzelnen oder mehreren optischen oder elektrischen Übertragungsmedien bestehen. Beim dargestellten Ausführungsbeispiel sind nur drei Slave-PCs vorhanden, hierbei ist jedoch auch eine beliebige Anzahl von n Slave-PCs einrichtbar.

Die Koppelbausteine 14, 15 und 16 sind im Prinzip gleich aufgebaut und enthalten ebenfalls je einen Interfacebaustein 20, eine Slave-Master-Synchronisationslogik 21 und ein Speichermodul (RAM) 22. Die Koppelbausteine 14, 15 und 16 werden wie beim Master-PC 1 in den jeweiligen dritten Speichererweiterungsslot 23 der Slave-PCs 17, 18 und 19 gesteckt.

Die Funktionsweise eines Datenaustausches zum Abarbeiten eines so genannten Tasks innerhalb des Cluster-Servers mit den Master- und Slave-PCs 1, 17, 18 und 19 nach der Figur wird nachfolgend prinzipiell erläutert. Der Master-PC 1 legt hierzu den Task und die zugehörigen Daten in einem dem Koppelbaustein 5 zugeordneten Speicherbereich im Speicher 6 ab, wobei der Master-PC 1 jedoch im Speichererweiterungsslot 4 nur ein normales Speichermodul (RAM) erkennt. Danach wird ein so genanntes Flag gesetzt, das signalisiert, dass die Daten und der Task für die Weiterverarbeitung im Cluster-Server zur Verfügung stehen.

Der Koppelbaustein 5 des Master-PCs 1 reagiert auf dieses Flag und entscheidet aufgrund der Adressinformation in den abgespeicherten Daten, welcher der Slave-PCs 17, 18 oder 19 den zuvor beschriebenen Task zu bearbeiten hat, so dass der Task beispielsweise über die Datenverbindung 11 an den Slave-PC 17 mit Hilfe der intelligenten Master-Slave-Synchronisationslogik 7 und dem Interfacebaustein 8 übertragen werden kann. Auf der Empfangsseite wird der Task nun wiederum an eine vorgegebene Stelle in das Speichermodul 22 des Koppelbausteins 14 abgelegt und ein Flag gesetzt, das signalisiert, dass die Daten und der Task für die Weiterverarbeitung im Slave-PC 17 zur Verfügung stehen.

Die Flags können dabei so aufgebaut sein, dass gegebenenfalls auch ein Interruptsignal über eine separate Busverbindung, z. B. über den PCI-Bus auf der Rechnerbaugruppe in den PCs 1, 17, 18 und 19, übertragbar und auswertbar ist, um keine Zeit für sonst notwendige Polling- bzw. Aufrufmechanismen aufwenden zu müssen.

Beim gezeigten Ausführungsbeispiel kann nun der Slave-PC 17 den Task ausführen und das Ergebnis wiederum in einen vorgegebenen Speicherbereich des Speichermoduls 22 ablegen. Mit Hilfe der intelligenten Slave-Master-Synchronisationslogik 21 und dem Interfacebaustein 20 können nunmehr die Daten wieder über die Datenverbindung 11 in einen bestimmten Adressbereich im Speichermodul 6 des Koppelbausteins 5 am Master-PC 1 abgespeichert werden und es kann, wie oben beschrieben, ein Flag gesetzt werden, das signalisiert, dass die Daten und der Task für die Weiterverarbeitung im Master-PC 1 zur Verfügung stehen.

## Patentansprüche

1. Datenverarbeitungsanlage mit mindestens einer Rechnerbaugruppe (1, 17, 18, 19), die mit Erweiterungssteckplätzen (2, 3, 4, 23) für weitere Baugruppen ausgestattet ist, **dadurch gekennzeichnet, dass** in die Erweiterungssteckplätze (4, 23) für Speichermodule (RAM) jeweils ein Koppelbaustein (5, 14, 15, 16) steckbar ist, über den der Datenverkehr zu weiteren Rechnerbaugruppen (1, 17, 18, 19) oder zu anderen autark arbeitenden Baugruppen führbar ist.

2. Datenverarbeitungsanlage nach Anspruch 1, **dadurch gekennzeichnet, dass** die mindestens eine Rechnerbaugruppe (1) ein Master-Rechner ist und die anderen Rechnerbaugruppen (17, 18, 19) jeweils Slave-Rechner sind, wobei alle Rechnerbaugruppen (1, 17, 18, 19) mit einem Koppelbaustein (5, 14, 15, 16) versehen sind und wobei die Koppelbausteine (14, 15, 16) der Slave-Rechner (17, 18, 19) jeweils über Interfacebausteine (20) mit einem Interfacebaustein (8, 9, 10) im Koppelbaustein (5) des Master-Rechners (1) über eine separate Hochgeschwindigkeitsdatenleitung (11, 12, 13) verbunden sind.

3. Datenverarbeitungsanlage nach Anspruch 2, **dadurch gekennzeichnet, dass** die Interfacebausteine (8, 9, 10, 20) jeweils über Synchronisations-Logikbausteine (7, 21) mit dem jeweiligen Erweiterungssteckplatz (4, 23) verbunden sind.

4. Datenverarbeitungsanlage mit mindestens einer Rechnerbaugruppe, die mit Erweiterungssteckplätzen für weitere Baugruppen ausgestattet ist, **dadurch gekennzeichnet, dass** in die Erweiterungssteckplätze für Grafikmodule jeweils ein Koppelbaustein steckbar ist, über den der Datenverkehr zu weiteren Rechnerbaugruppen oder zu anderen autark arbeitenden Baugruppen führbar ist.

5. Datenverarbeitungsanlage nach Anspruch 1 oder 4, **dadurch gekennzeichnet, dass** der Koppelbaustein direkt mit einer autark arbeitenden Baugruppe verbunden oder versehen ist.

6. Datenverarbeitungsanlage nach Anspruch 5, **dadurch gekennzeichnet, dass** die autark arbeitende Baugruppe ein Logikanalysator-Modul ist.

7. Verfahren zum Betrieb einer Datenverarbeitungsanlage nach einem der Ansprüche 2 oder 3, **dadurch gekennzeichnet, dass** der Master-Rechner (1) ein von einem Slave-Rechner (17) zu bearbeitendes Programmteil in einem dem Koppelbaustein (5) zugeordneten Speicherbereich ablegt und mit einem Flag signalisiert, dass die Daten und das Programmteil zur Verfügung stehen,
dass anhand der ebenfalls hinterlegten Adressinformation die Daten zu dem adressierten Slave-Rechner (17) übertragen werden und dort ebenfalls mit einem Flag signalisiert wird, dass die Daten zur Verfügung stehen,
dass nach der Abarbeitung des Programmteils die Daten in einem vorgegebenen Speicherbereich des Koppelbausteins (14) im Slave-Rechner (17) zur Übertragung an den Master-Rechner (1) hinterlegt werden und
dass dort wiederum nach einer Abspeicherung in einem vorgegebenen Speicherbereich mit einem Flag signalisiert wird, dass das Programmteil abgearbeitet ist.

8. Verfahren zum Betrieb einer Datenverarbeitungsanlage nach Anspruch 7, **dadurch gekennzeichnet, dass** das oder die Flags so aufgebaut sind, dass auch ein Interruptsignal über eine separate Busverbindung auswertbar ist.

9. Software- oder Firmware-Baustein zum Betrieb einer Datenverarbeitungsanlage nach einem der Ansprüche 1 bis 6 oder zur Durchführung eines Verfahrens nach einem der Ansprüche 7 oder 8.
